# EUROPEAN PATENT SPECIFICATION

(11) **EP 4 438 527 B1**
(45) Date of publication and mention of the grant of the patent: **01.04.2026**
(21) Application number: 24166741.9
(22) Date of filing: 27.03.2024
(51) Int. Cl.: B65G 1/04, B65G 1/06, B65G 1/137

(54) **AUTOMATED WAREHOUSE WITH FOUR-WAY VEHICLE**
AUTOMATISIERTES LAGER MIT VIERWEGEFAHRZEUG
ENTREPÔT AUTOMATISÉ AVEC VÉHICULE À QUATRE VOIES

(30) Priority: 28.03.2023 IT 202300005928
(43) Date of publication of application: 02.10.2024
(73) Proprietor: Eurofork S.p.A., 10060 Roletto (TO) (IT)
(72) Inventor: GAROLA, Alessandro, I-10061 CAVOUR (Torino) (IT); TRAVERSA, Maurizio, I-10137 TORINO (IT)
(74) Representative: Fioravanti, Corrado

(56) References cited:
- US-A1- 2016 137 418
- US-A1- 2020 399 060

## Description

### FIELD OF THE INVENTION

The present invention relates to an automated warehouse with a system for handling cargo units by means of four-way vehicles moving on a perpendicular track system.

### BACKGROUND ART

Automated warehouses are known with systems for handling cargo units by means of remotely controlled vehicles, referred to as shuttles and satellites, as disclosed in patent publication WO 2015/011575 A1. An automated warehouse of the above-mentioned type comprises at least one main path and a plurality of secondary side paths, perpendicular to the main path, along which storage locations suitable for receiving cargo units are defined. The cargo units are moved by two types of vehicles: a first main self-propelled vehicle (called a "shuttle" or, alternatively, a stacker crane), and a second auxiliary self-propelled vehicle (called "satellite"), which can be transported by the first vehicle. The shuttle moves along the main path, carrying the satellite. Once the shuttle has reached the secondary path where the location where a cargo unit is to be deposited or picked up is located, the satellite leaves the shuttle and, moving along the secondary path, can deposit or pick up a cargo unit.

Location data representations in the form of bar codes or data matrices (two-dimensional matrix barcodes) are applied along the main and secondary paths, which univocally identify the absolute positions of reference points or intervals along the paths within the automated warehouse. Representations in the form of bar codes or data matrices are readable by vehicle-mounted optical readers.

The use of such data representations improves the accuracy with which the correct positioning of vehicles within the warehouse can be controlled, overcoming the limitations associated with traditional position feedback systems, generally based on "encoder" type transducers. These systems involve an encoder that detects the rotation of the vehicles wheels, converting the number of revolutions recorded into a linear length, calculated incrementally, with respect to a previously determined reference point. Wheel wear contributes to a decrease in the reliability of current positioning control solutions. The data made available by an encoder that detects the rotation of the vehicles' wheels, converting the number of recorded revolutions into a linear length, are affected by the wear of the wheels, as the conversion algorithm continues to operate on the basis of values that do not correspond to reality. Vibrations or slippage of the wheels can also affect the accuracy of the expected location of the vehicle. In addition, uncertainties and positioning errors may occur due to temporary power failures, or as a result of manual vehicle movements, which may occur during servicing, without controlling the movement via the vehicle's propulsion system.

Automated warehouses in which vehicles known as "four-way shuttles" operate are known in the art and described, for example, in WO 2020/062208 A1. Each vehicle is capable of picking up and placing a cargo unit by moving along tracks extending in two perpendicular horizontal directions. The perpendicular track system comprises a first set of pairs of parallel rails arranged in a first direction, and a second set of pairs of parallel rails arranged in a second direction perpendicular to the first direction. A four-way vehicle consists of a single unit having the capacity to move in two orthogonal directions by means of two sets of wheels perpendicular to each other, one set of which is temporarily brought into contact with a pair of rails of the first set, while the second set of wheels is raised and not in contact with the rails of the second set, to move the vehicle in the first direction. To move the vehicle in the second direction, the wheels of the first set are raised and disengaged from the rails of the first set, and the wheels of the second set are lowered to engage a pair of rails of the second set.

US 2020/0399060 A1 discloses the preamble of claim 1 and describes a system for determining the position of a transport device with a grid structure having perpendicular rails and a load handling device with wheels that can be raised and lowered to engage with different sets of rails in order to make the four-way vehicle capable of moving in perpendicular directions. Sensors and control systems are provided to scan representations of position data on the grid structure and determine the position of the transport devices. A control unit receives information from a sensor mounted on the transport device and calculates the position of the transport device based on the received information to enhance the positioning of the transport devices, allowing them to be driven with minimal positional errors, and reducing the spacing between them.

### SUMMARY OF THE INVENTION

It is an object of the present invention to provide an automated warehouse in which one or more vehicles of the "four-way" type operate, equipped with an absolute positioning system, i.e. one that detects absolute position data (and not distances), where such data are based on an external, fixed, vehicle-independent reference system.

The above and other objects and advantages are achieved, according to an aspect of the present invention, by an automated warehouse as described and claimed herein. Preferred embodiments of the automated warehouse are also described.

In summary, an automated warehouse includes a plurality of pairs of parallel first rails arranged in a first horizontal direction, and a plurality of pairs of parallel second rails arranged in a second direction, perpendicular to the first direction, wherein the rails have respective first and second upwardly facing raceways. The warehouse comprises at least one four-way vehicle suitable for carrying cargo units along the first and second rails and is equipped with a first set of wheels, arranged along two first opposite sides of the vehicle, and a second set of wheels, arranged along two second opposite sides of the vehicle, perpendicular to the first sides. The wheels of at least one of the first and second sets of wheels are raised and lowered relative to the other set of wheels to selectively engage the wheels of the first set of wheels with the raceways of a pair of rails of the first plurality of pairs of rails, and simultaneously disengage the wheels of the second set of wheels from the raceways of the second plurality of pairs of rails, and vice versa. At least one rail in the pairs of first rails has an inner face facing the other of the two rails of the same pair. Adjacent to and along said inner face in the pairs of first raceways, there is arranged an optically readable first representation of position data which unambiguously identifies absolute positions of points, within the automated warehouse and along the pairs of first rails wherein each of said first representations of position data is located. A second optically readable representation of position data, which univocally identifies absolute positions of points, within the automated warehouse and along the pairs of second rails wherein each of said second representations of position data is located, is arranged adjacent to and along the second rails in the pairs of second rails. First and second optical readers, mounted on board each vehicle, are configured to read respectively the first and second data representations along respective mutually perpendicular rails. The first representations of position data are arranged lower than the first raceways on the first rails, and the second representations of position data are arranged higher than the second raceways on the second rails.

### BRIEF DESCRIPTION OF THE DRAWINGS

A few preferred embodiments of an automated warehouse will now be described referring to the attached drawings, in which:
figure 1 is a schematic perspective view of part of an automated warehouse, with a four-way vehicle at a junction between two pairs of perpendicular rails; and
figures 2 and 3 are respectively a perspective view and a top view of the warehouse part of figure 1, where some elements have been removed for illustrative purposes.

### DETAILED DESCRIPTION

With reference to the drawings, an automated warehouse comprises one or more four-way vehicles 10 and a perpendicular track system 11, 12 along which each four-way vehicle can move to pick and place cargo units by travelling along two perpendicular horizontal directions. The cargo units (not shown) may include storage containers, such as pallets or similar items.

The perpendicular track or path system comprises a plurality of pairs of parallel first rails or guides 11a, 11b arranged in a first horizontal direction, and a plurality of pairs of parallel second rails 12a, 12b or guides arranged in a second direction, perpendicular to the first direction. In the accompanying drawings, only part of a pair of first rails and second rails is visible. Storage locations (not shown), suitable for receiving cargo units, are distributed, in a per se known manner, alongside the rails, particularly of the second rails 12. Each of the first rails has a respective first horizontal upwardly facing raceway 13, on which a respective row of a pair of parallel rows of wheels 28 of the vehicle can roll.

At least one 11b of the two rails of the pair of first rails has a vertical or "inner" face or side 14 facing the other 11a of the two rails of the same pair. Arranged along the vertical face 14 of at least one of the two rails of the pair of first rails is a first representation 15 of position data, in this example in the form of bar codes or data matrices (two-dimensional matrix bar codes), which univocally identify the absolute positions of reference points or intervals along the rail within the automated warehouse, where each of the first representations 15 of position data is located. The data representations are readable by a first optical reader 16 mounted on board one of the four-way vehicles 10 in the warehouse.

According to a preferred embodiment, the first representation 15 of position data is made as a strip 17 of tape material bearing data typically represented as a bar code or data matrix. The strip 17 may be applied by means of an adhesive.

The choice of the specific type of optically readable representation is not to be considered as being limited to bar codes and data matrixes. Alternative embodiments may provide for position data to be represented in forms other than those mentioned above, as long as they are suitable for making the position data of the points where these representations are applied readable.

Preferably, the data representations are placed at a lower level than the raceway, in a position that makes the data representation less susceptible to abrasion, scratching, tearing, or removal or damage by bumping or rubbing.

Embodiments may provide that, as in the shown example, the first representation 15 of position data is oriented in an oblique plane, inclined relative to a horizontal plane and a vertical plane. The inclination is advantageous in that such angular orientation reduces the deposit of dirt and dust on the face of the data representation that is to be read optically.

The inclined orientation of the first data representations can be achieved by applying a strip of tape material bearing the position data to an inclined slat formation or portion 18 attached to or adjacent to the inner face 14.

Alternative embodiments (not shown) may provide for the data representation to be oriented vertically, applied to the inner face of the rail. A vertical orientation requires an adaptation to mount the corresponding optical reader on the vehicle, so that the reader is pointed towards the data representation at a not too narrow reading angle.

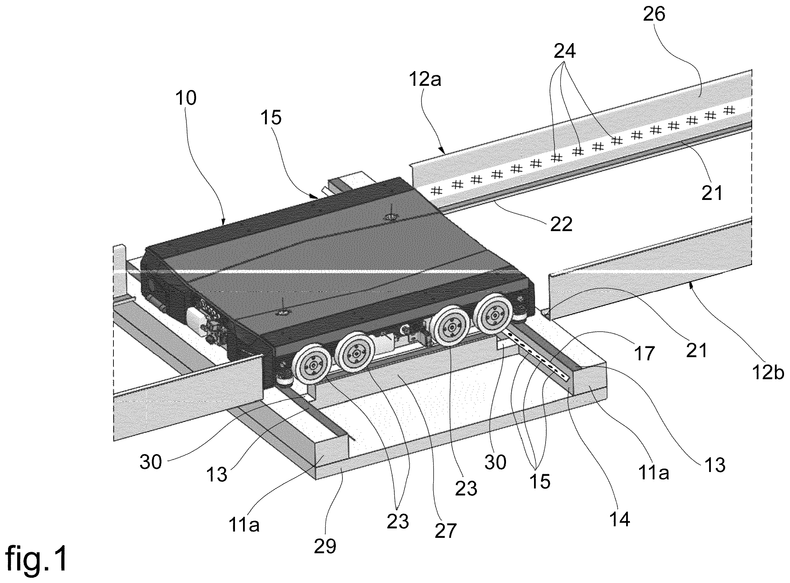

Still referring to figure 1, each of the second rails 12a, 12b has a respective second horizontal upward-facing raceway 21 on which a respective row of a pair of parallel rows of wheels 28 of the vehicle can roll.

The second rails 12 may be made in a plurality of cross-sectional shapes, preferably by means of box sectional metal profiles, having inverted U or C or Z shapes, etc. In the shown embodiment, the rails are realised with a Z section, with a lower horizontal wing 22 having a respective second raceway 21.

Arranged adjacent to at least one of the second raceways is a second representation 24 of position data, in the form of bar codes or data matrixes (two-dimensional matrix bar codes), which univocally identify the absolute positions of reference points or intervals along the track within the automated warehouse. The second representation 24 of position data is readable by a second optical reader 25 mounted on board the four-way vehicle.

Preferably, the second representation 24 of position data associated with the second raceway 21 is placed higher up than this one.

According to a preferred embodiment, at least one of the two rails of the pair of second rails 12a, 12b has a vertical or "inner" face or slat 26 facing the other of the two rails of the same pair, and the second position data representation is applied to that inner vertical face or slat 26.

According to a preferred embodiment, in a crossing area between a pair of first rails 11 and a pair of second rails 12, a respective rectilinear connecting element 27 is provided for each of the second raceways 21. The rectilinear connecting element 27 is arranged between the pair of first rails perpendicularly to the pair of first rails. The rectilinear connecting element 27 superiorly has a second raceway section aligned and arranged as a bridge between the second rails 21 in the crossing area between a pair of first rails and a pair of second rails. As shown, the rectilinear connecting elements 27 provide a continuation of the second raceways 21 at the points where these cross the first rails.

The connecting elements may be mounted in pairs on a horizontal plate 29 bearing a pair of first rails. In order to allow uninterrupted reading of the data represented on the data representation of the first pair of rails, each connecting element has an upper recess 30 at one end thereof located adj acent to a first rail providing the first position data representation. The upper recess 30 is configured and dimensioned to allow the passage of the first representation of position data 15 and advantageously has an extension, as measured in the horizontal direction in which the connecting element extends, which allows the first optical reader 16 to be mounted in such a position that, when the vehicle 10 passes along the pair of first rails 11, the reading is not interrupted by the apex formed between the recess 30 and the highest central portion 32 of the connecting element 27.

A "four-way" vehicle comprises a single unit being able of translating in two orthogonal directions by means of two orthogonal sets of wheels 23, 28. The general arrangement of a "four-way" vehicle of the type depicted in the figures is generally known. Accordingly, only those elements of specific relevance and interest for the implementation of the present invention will be described in detail below. For the implementation of the parts and elements not shown in detail, reference may therefore be made to any known type of "four-way" vehicle.

On each vehicle 10, having a substantially rectangular shape in plan, there are two sets of wheels: a first set of wheels 23, arranged along two first opposing sides of the vehicle, are associated with a motor or drive mechanism (not shown) capable of providing propulsion energy to drive wheels of the first set in both directions of the first longitudinal direction of the first rails 11. The vehicle has a second set of wheels 28, arranged along two other second opposite sides of the vehicle, perpendicular to the first sides. The wheels of the second set are associated with a second motor or drive mechanism (not shown) capable of providing propulsion energy to drive wheels of the second set of wheels 28 in both directions of a second transverse direction, perpendicular to the first longitudinal direction.

Only one at a time, of the two sets of wheels 23, 28, can be in contact with the rails along which the vehicle is to move. The selective disengagement or engagement of each set of wheels from their respective rails is provided by means of a lifting system (not shown), mounted on board the vehicle, which can be variously configured to raise and lower one or two frames, as appropriate, to which the first and second sets of wheels are respectively mounted.

The vehicle is typically arranged, according to aspects "per se" known and not described or shown herein, to lift the cargo units to be transported. The lifting is accomplished by means of a lifting system that acts independently of the propulsion mechanisms, and which may involve lifting only a top bearing surface of the vehicle, or the entire vehicle. A power source for the vehicle may include a rechargeable electric accumulator (not shown) to ensure autonomy during operational missions.

The first 16 and the second 25 optical readers are configured to read, respectively, the data representations distributed along the rail pairs of the first 11 and second 12 sets of rails.

According to an embodiment, the first optical reader 16 for the first representations of position data 15 is mounted inside the vehicle, close to one side of the vehicle where the first set of wheels is mounted for movement along the first rails.

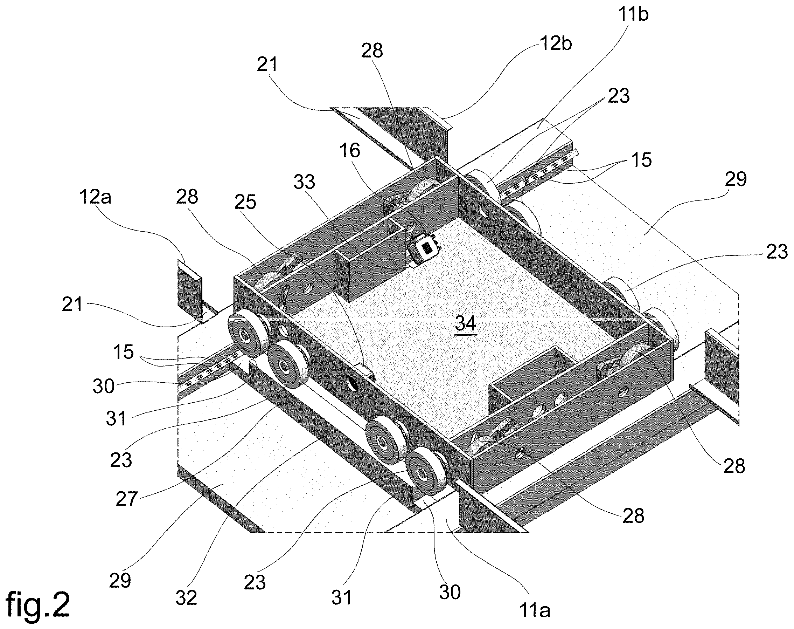

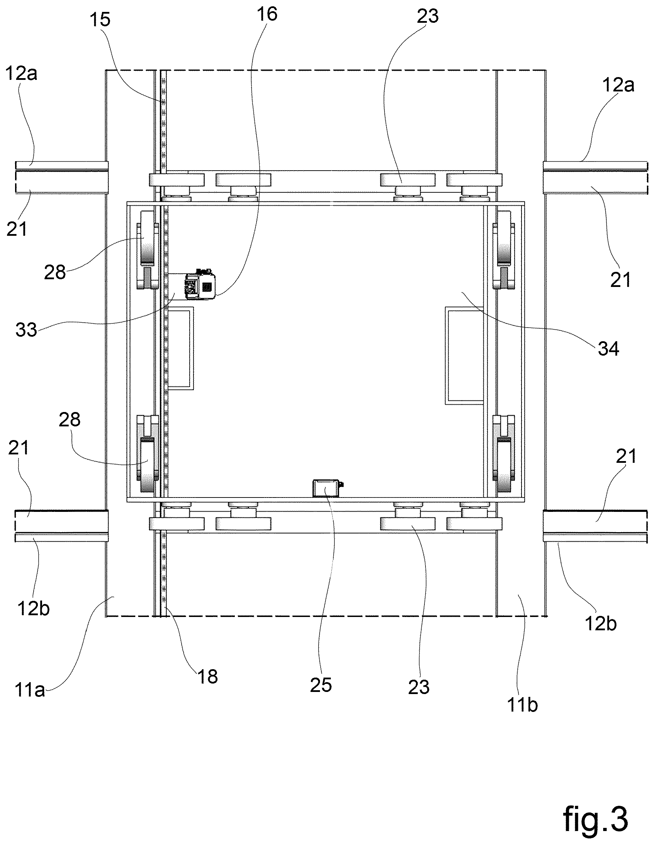

In the example shown in Figures 2 and 3, in order to facilitate a reading in a direction as perpendicular as possible to the lying plane of the data representation, a through opening 33 is formed in a lateral position in a lower floor 34 of the vehicle.

In the shown embodiment, the second optical reader 25 for the second representations of position data is mounted laterally on one side of the vehicle, on the side of the second set of wheels for movement along the second rails.

The specific technology of optical sensors may vary depending on the requirements and future developments of this technology. For example, optical readers with photodiode-associated light sources, laser light sources, LED barcode light sources, Charged Coupled Device (CCD) sensors, camera-type image reading systems, large field-of-view readers using high-resolution cameras able of simultaneously capturing information from a multiplicity of barcodes, etc. may be used. As an example, optical reading heads model PCV100-F200-B17-V1D-6011-8203, marketed by the company Pepperl+Fuchs FA Italia S.r.l., may be used.

The position data collected by the optical readers on board of the vehicle allow a mapping of the warehouse. The position data recorded in real time by the optical sensors on a vehicle may be transmitted from an on-board data transmission unit to a central warehouse data reception, processing and transmission unit, which allows the movement of each individual vehicle to be monitored and the paths of the various moving vehicles to be coordinated in order to optimise the cycle times for picking up and delivery of cargo units between a delivery and picking location and the multiplicity of storage locations in the warehouse.

Various aspects and embodiments of the automated warehouse have been described. It is understood that each embodiment may be combined with any other embodiment. Furthermore, the invention is not limited to the described embodiments, but may be varied within the scope defined by the appended claims.

## Claims

1. An automated warehouse, comprising:
- a perpendicular rail system comprising a plurality of pairs of parallel first rails (11a, 11b) arranged in a first horizontal direction, and a plurality of pairs of parallel second rails (12a, 12b) arranged in a second direction, perpendicular to the first direction, wherein said first and second rails (11a, 11b; 12a, 12b) provide respective first (13) and second (21) upwardly facing raceways;
- at least one four-way vehicle (10) for transporting cargo units along said first and second plurality of pairs of rails, with a first set of wheels (23), arranged along two first opposite sides of the four-way vehicle, and with a second set of wheels (28) arranged along two second opposite sides of the four-way vehicle, perpendicular to said first sides, wherein the wheels of at least one of the first and second sets of wheels are liftable and lowerable relative to the other set of wheels, to selectively engage the wheels of the first set of wheels with the raceways of a pair of rails of the plurality of pairs of first rails, and simultaneously disengage the wheels of the second set of wheels from the raceways of the plurality of pairs of second rails, and vice versa; **characterized in that**
at least one rail (11b) in the pairs of first rails (11a, 11b) has an inner face (14) facing the other (11a) rail of a same pair of first rails;
a first optically readable representation of position data is arranged adjacent to and along said inner face (14) in the pairs of first rails, univocally identifying absolute positions of points, within the automated warehouse and along the pairs of first rails (11a, 11b), where each of said first optically readable representations (15) of position data is located;
a second optically readable representation (24) of position data is arranged adjacent to and along the second raceways (21) of at least one rail (12a) in the pairs of second rails (12a, 12b), where each of said second optically readable representations (24) of position data is located, univocally identifying the absolute positions of points, within the automated warehouse and along the pairs of second rails (12a, 12b), where each of said second optically readable representations (24) of position data is located;
a first (16) optical reader and a second (25) optical reader, mounted on board of the at least one four-way vehicle (10), are configured to read respectively the first (15) and second (24) optically readable representations of position data along respective first and second rails (11, 12) perpendicular to one another, and wherein
the first optically readable representations (15) of position data are arranged lower than the first raceways (13) on the first rails (11b), and
the second optically readable representations (24) of position data are arranged higher than the second raceways (21) on the second rails (12a).

2. An automated warehouse according to claim 1, wherein at least some of the first representations (15) of position data are oriented in oblique planes, inclined with respect to a horizontal plane and respective vertical planes, wherein each oblique plane is oriented upwards and towards the first rail (11a) opposite the rail (11b) having the inner face (14) adjacent to which the respective first representation (15) of position data is arranged.

3. An automated warehouse according to claim 2, wherein said inclined orientation of the first representations (15) of position data is obtained by applying a strip (17) of tape-like material bearing the first optically readable representations of position data on an inclined strip formation or portion (18), adjacent to said inner face (14) of the first rail (11b).

4. An automated warehouse according to claim 1, wherein at least some of the first representations (15) of position data are applied to said inner face (14), said inner face (14) being vertically oriented and facing the other (11a) of the two rails of the same pair (11a, 11b) of first rails.

5. An automated warehouse according to any one of the preceding claims, wherein the second representations (24) of position data are arranged on a vertical inner face (26) of one (12a) of the two rails (12a, 12b) of the pair of second rails, wherein said vertical inner face (26) is oriented towards the other (12b) of the two rails (12a, 12b) of a same pair of second rails.

6. An automated warehouse according to any one of the preceding claims, wherein the first optical reader (16) for the first representations (15) of position data is mounted internally in the four-way vehicle (10), adjacent a side of the four-way vehicle where the first set (23) of wheels for moving the four-way vehicle along the first rails (11a, 11b) is mounted.

7. An automated warehouse according to claim 6, wherein the four-way vehicle (10) comprises a lower floor (34) having a through opening (33) in a lateral position below the first optical reader (16).

8. An automated warehouse according to any one of the preceding claims, wherein the second optical reader (25) for the second representations (24) of position data is mounted laterally on the four-way vehicle (10), at one side where wheels of the second set of wheels (28) for moving the four-way vehicle along the second rails (12a, 12b) are arranged.

9. An automated warehouse according to any one of the preceding claims, wherein at each crossing area between a pair of first rails (11a, 11b) and a pair of second rails (12a, 12b), for each of the second raceways a rectilinear connecting element (27) is arranged between the pair of first rails (11a, 11b) perpendicularly thereto, wherein each connecting element (27) provides a length of second raceway (21) aligned with and bridging the second rails in the crossing area between the pair of first rails (11a, 11b) and the pair of second rails (12a, 12b), so that the connecting elements (27) provide a continuation of the second raceways (21) at the points where the second raceways (21) cross the first rails (11a, 11b).

10. An automated warehouse according to claim 9, wherein the connecting elements (27) are mounted in pairs on a horizontal plate (29) suitable for supporting a pair of first rails (11a, 11b).

11. An automated warehouse according to claims 6 and 9, wherein each connecting element (27) has an upper recess (30) at one end thereof located adjacent to a first rail (11b) having the first representation (15) of position data, said upper recess being configured to allow to the first optical reader (16) an uninterrupted reading of the first representation (15) of position data on the pair of first rails (11a, 11b).

12. An automated warehouse according to any one of the preceding claims, wherein the first and second representations (15, 24) of position data comprise data represented as bar codes or as data matrix and/or the like.

13. An automated warehouse according to any one of the preceding claims, wherein the first and second representations (15, 24) of position data comprise data represented on strips (17) of tape material applied by adhesive to the first and second rails (11a, 11b; 12a, 12b).

## Patentansprüche

1. Automatisiertes Lager, mit:
- ein senkrechtes Schienensystem, umfassend eine Mehrzahl von Paaren paralleler erster Schienen (11a, 11b), die in einer ersten horizontalen Richtung angeordnet sind, und eine Mehrzahl von Paaren paralleler zweiter Schienen (12a, 12b), die in einer zweiten Richtung senkrecht zur ersten Richtung angeordnet sind, wobei die ersten und zweiten Schienen (11a, 11b; 12a, 12b) jeweils erste (13) und zweite (21) nach oben gerichtete Laufbahnen bereitstellen;
- mindestens ein Vierwegefahrzeug (10) zum Transport von Ladungseinheiten entlang der ersten und zweiten Mehrzahl von Schienenpaaren, mit einem ersten Satz Räder (23), der entlang zweier erster gegenüberliegender Seiten des Vierwegefahrzeugs angeordnet ist, und mit einem zweiten Satz Räder (28), der entlang zweier zweiter gegenüberliegender Seiten des Vierwegefahrzeugs senkrecht zu den ersten Seiten angeordnet ist, wobei die Räder mindestens eines des ersten und zweiten Satzes Räder relativ zum anderen Satz Räder anhebbar und absenkbar sind, um die Räder des ersten Satzes Räder wahlweise mit den Laufbahnen eines Schienenpaares der Mehrzahl von Paaren erster Schienen in Eingriff zu bringen und gleichzeitig die Räder des zweiten Satzes Räder von den Laufbahnen der Mehrzahl von Paaren zweiter Schienen zu lösen, und umgekehrt;
**dadurch gekennzeichnet, dass**
mindestens eine Schiene (11b) in den Paaren erster Schienen (11a, 11b) eine Innenfläche (14) aufweist, die der anderen Schiene (11a) eines gleichen Paares erster Schienen zugewandt ist;
eine erste optisch lesbare Darstellung von Positionsdaten angrenzend an und entlang der Innenfläche (14) in den Paaren erster Schienen angeordnet ist, die eindeutig absolute Positionen von Punkten innerhalb des automatisierten Lagers und entlang der Paare erster Schienen (11a, 11b) identifiziert, wo sich jede der ersten optisch lesbaren Darstellungen (15) von Positionsdaten befindet;
eine zweite optisch lesbare Darstellung (24) von Positionsdaten angrenzend an und entlang der zweiten Laufbahnen (21) mindestens einer Schiene (12a) in den Paaren zweiter Schienen (12a, 12b) angeordnet ist, wo sich jede der zweiten optisch lesbaren Darstellungen (24) von Positionsdaten befindet, die eindeutig die absoluten Positionen von Punkten innerhalb des automatisierten Lagers und entlang der Paare zweiter Schienen (12a, 12b) identifiziert, wo sich jede der zweiten optisch lesbaren Darstellungen (24) von Positionsdaten befindet;
ein erster (16) optischer Leser und ein zweiter (25) optischer Leser, die an Bord des mindestens einen Vierwegefahrzeugs (10) montiert sind, so konfiguriert sind, dass sie jeweils die erste (15) und zweite (24) optisch lesbare Darstellung von Positionsdaten entlang jeweiliger erster und zweiter Schienen (11, 12) lesen, die senkrecht zueinander stehen, und wobei
die ersten optisch lesbaren Darstellungen (15) von Positionsdaten niedriger als die ersten Laufbahnen (13) an den ersten Schienen (11b) angeordnet sind, und
die zweiten optisch lesbaren Darstellungen (24) von Positionsdaten höher als die zweiten Laufbahnen (21) an den zweiten Schienen (12a) angeordnet sind.

2. Automatisiertes Lager nach Anspruch 1, wobei mindestens einige der ersten Darstellungen (15) von Positionsdaten in schrägen Ebenen ausgerichtet sind, die in Bezug auf eine horizontale Ebene und jeweilige vertikale Ebenen geneigt sind, wobei jede schräge Ebene nach oben und zu der ersten Schiene (11a) hin ausgerichtet ist, die der Schiene (11b) gegenüberliegt, welche die Innenfläche (14) aufweist, angrenzend an die die jeweilige erste Darstellung (15) von Positionsdaten angeordnet ist.

3. Automatisiertes Lager nach Anspruch 2, wobei die geneigte Ausrichtung der ersten Darstellungen (15) von Positionsdaten durch Aufbringen eines Streifens (17) aus bandartigem Material, der die ersten optisch lesbaren Darstellungen von Positionsdaten trägt, auf eine geneigte Streifenformation oder einen Abschnitt (18) angrenzend an die Innenfläche (14) der ersten Schiene (11b) erhalten wird.

4. Automatisiertes Lager nach Anspruch 1, wobei mindestens einige der ersten Darstellungen (15) von Positionsdaten auf die Innenfläche (14) aufgebracht sind, wobei die Innenfläche (14) vertikal ausgerichtet ist und der anderen (11a) der zwei Schienen des gleichen Paares (11a, 11b) erster Schienen zugewandt ist.

5. Automatisiertes Lager nach einem der vorhergehenden Ansprüche, wobei die zweiten Darstellungen (24) von Positionsdaten auf einer vertikalen Innenfläche (26) einer (12a) der zwei Schienen (12a, 12b) des Paares zweiter Schienen angeordnet sind, wobei die vertikale Innenfläche (26) zu der anderen (12b) der zwei Schienen (12a, 12b) eines gleichen Paares zweiter Schienen hin ausgerichtet ist.

6. Automatisiertes Lager nach einem der vorhergehenden Ansprüche, wobei der erste optische Leser (16) für die ersten Darstellungen (15) von Positionsdaten im Inneren des Vierwegefahrzeugs (10) montiert ist, angrenzend an eine Seite des Vierwegefahrzeugs, an der der erste Satz (23) Räder zum Bewegen des Vierwegefahrzeugs entlang der ersten Schienen (11a, 11b) montiert ist.

7. Automatisiertes Lager nach Anspruch 6, wobei das Vierwegefahrzeug (10) einen unteren Boden (34) umfasst, der eine Durchgangsöffnung (33) in einer seitlichen Position unterhalb des ersten optischen Lesers (16) aufweist.

8. Automatisiertes Lager nach einem der vorhergehenden Ansprüche, wobei der zweite optische Leser (25) für die zweiten Darstellungen (24) von Positionsdaten seitlich an dem Vierwegefahrzeug (10) montiert ist, an einer Seite, an der Räder des zweiten Satzes Räder (28) zum Bewegen des Vierwegefahrzeugs entlang der zweiten Schienen (12a, 12b) angeordnet sind.

9. Automatisiertes Lager nach einem der vorhergehenden Ansprüche, wobei an jedem Kreuzungsbereich zwischen einem Paar erster Schienen (11a, 11b) und einem Paar zweiter Schienen (12a, 12b) für jede der zweiten Laufbahnen ein geradliniges Verbindungselement (27) zwischen dem Paar erster Schienen (11a, 11b) senkrecht dazu angeordnet ist, wobei jedes Verbindungselement (27) eine Länge der zweiten Laufbahn (21) bereitstellt, die mit den zweiten Schienen im Kreuzungsbereich zwischen dem Paar erster Schienen (11a, 11b) und dem Paar zweiter Schienen (12a, 12b) fluchtet und diese überbrückt, so dass die Verbindungselemente (27) eine Fortsetzung der zweiten Laufbahnen (21) an den Stellen bereitstellen, an denen die zweiten Laufbahnen (21) die ersten Schienen (11a, 11b) kreuzen.

10. Automatisiertes Lager nach Anspruch 9, wobei die Verbindungselemente (27) paarweise auf einer horizontalen Platte (29) montiert sind, die zum Stützen eines Paares erster Schienen (11a, 11b) geeignet ist.

11. Automatisiertes Lager nach den Ansprüchen 6 und 9, wobei jedes Verbindungselement (27) eine obere Aussparung (30) an einem Ende davon aufweist, das angrenzend an eine erste Schiene (11b) angeordnet ist, welche die erste Darstellung (15) von Positionsdaten aufweist, wobei die obere Aussparung so konfiguriert ist, dass sie dem ersten optischen Leser (16) ein ununterbrochenes Lesen der ersten Darstellung (15) von Positionsdaten auf dem Paar erster Schienen (11a, 11b) ermöglicht.

12. Automatisiertes Lager nach einem der vorhergehenden Ansprüche, wobei die ersten und zweiten Darstellungen (15, 24) von Positionsdaten Daten umfassen, die als Barcodes oder als Datenmatrix und/oder dergleichen dargestellt sind.

13. Automatisiertes Lager nach einem der vorhergehenden Ansprüche, wobei die ersten und zweiten Darstellungen (15, 24) von Positionsdaten Daten umfassen, die auf Streifen (17) aus Klebebandmaterial dargestellt sind, die mittels Klebstoffs auf die ersten und zweiten Schienen (11a, 11b; 12a, 12b) aufgebracht sind.

## Revendications

1. Entrepôt automatisé, comprenant :
- un système de rails perpendiculaires comprenant une pluralité de paires de premiers rails parallèles (11a, 11b) disposées dans une première direction horizontale, et une pluralité de paires de seconds rails parallèles (12a, 12b) disposées dans une seconde direction, perpendiculaire à la première direction, dans lequel lesdits premier et second rails (11a, 11b ; 12a, 12b) fournissent respectivement des premier (13) et second (21) chemins de roulement orientés vers le haut ;
au moins un véhicule à quatre voies (10) destiné au transport d'unités de chargement le long desdites première et deuxième pluralités de paires de rails, comportant un premier jeu de roues (23), disposé le long de deux premiers côtés opposés du véhicule à quatre voies, et comportant un deuxième jeu de roues (28) disposé le long de deux deuxièmes côtés opposés du véhicule à quatre voies, perpendiculairement auxdits premiers côtés, dans lequel les roues d'au moins l'un des premier et deuxième jeux de roues sont relevables et abaissables par rapport à l'autre jeu de roues, afin d'engager sélectivement les roues du premier jeu de roues avec les chemins de roulement d'une paire de rails de la pluralité de paires de premiers rails, et simultanément de désengager les roues du deuxième jeu de roues des chemins de roulement de la pluralité de paires de seconds rails, et vice versa;
**caractérisé en ce que**
au moins un rail (11b) dans les paires de premiers rails (11a, 11b) a une face intérieure (14) faisant face à l'autre rail (11a) d'une même paire de premiers rails ;
une première représentation optiquement lisible de données de position est disposée de manière adjacente à et le long de ladite face intérieure (14) dans les paires de premiers rails, identifiant de manière univoque des positions absolues de points, à l'intérieur de l'entrepôt automatisé et le long des paires de premiers rails (11a, 11b), où se trouve chacune desdites premières représentations optiquement lisibles (15) de données de position ;
une seconde représentation optiquement lisible (24) de données de position est disposée de manière adjacente à et le long des seconds chemins de roulement (21) d'au moins un rail (12a) dans les paires de seconds rails (12a, 12b), où se trouve chacune desdites secondes représentations optiquement lisibles (24) de données de position, identifiant de manière univoque les positions absolues de points, à l'intérieur de l'entrepôt automatisé et le long des paires de seconds rails (12a, 12b), où se trouve chacune desdites secondes représentations optiquement lisibles (24) de données de position ;
un premier (16) lecteur optique et un second (25) lecteur optique, montés à bord d'au moins un véhicule à quatre voies (10), sont configurés pour lire respectivement les première (15) et seconde (24) représentations optiquement lisibles de données de position le long de premiers et seconds rails respectifs (11, 12) perpendiculaires l'un à l'autre, et dans lequel
les premières représentations optiquement lisibles (15) de données de position sont disposées plus bas que les premiers chemins de roulement (13) sur les premiers rails (11b), et
les secondes représentations optiquement lisibles (24) de données de position sont disposées plus haut que les seconds chemins de roulement (21) sur les seconds rails (12a).

2. Entrepôt automatisé selon la revendication 1, dans lequel au moins certaines des premières représentations (15) de données de position sont orientées dans des plans obliques, inclinés par rapport à un plan horizontal et à des plans verticaux respectifs, dans lequel chaque plan oblique est orienté vers le haut et vers le premier rail (11a) opposé au rail (11b) ayant la face intérieure (14) adjacente à laquelle la première représentation (15) respective de données de position est disposée.

3. Entrepôt automatisé selon la revendication 2, dans lequel ladite orientation inclinée des premières représentations (15) de données de position est obtenue en appliquant une bande (17) de matériau semblable à du ruban portant les premières représentations optiquement lisibles de données de position sur une formation ou portion de bande inclinée (18), adjacente à ladite face intérieure (14) du premier rail (11b).

4. Entrepôt automatisé selon la revendication 1, dans lequel au moins certaines des premières représentations (15) de données de position sont appliquées sur ladite face intérieure (14), ladite face intérieure (14) étant orientée verticalement et faisant face à l'autre (11a) des deux rails de la même paire (11a, 11b) de premiers rails.

5. Entrepôt automatisé selon l'une quelconque des revendications précédentes, dans lequel les secondes représentations (24) de données de position sont disposées sur une face intérieure verticale (26) de l'un (12a) des deux rails (12a, 12b) de la paire de seconds rails, dans lequel ladite face intérieure verticale (26) est orientée vers l'autre (12b) des deux rails (12a, 12b) d'une même paire de seconds rails.

6. Entrepôt automatisé selon l'une quelconque des revendications précédentes, dans lequel le premier lecteur optique (16) pour les premières représentations (15) de données de position est monté à l'intérieur du véhicule à quatre voies (10), de manière adjacente à un côté du véhicule à quatre voies où est monté le premier ensemble (23) de roues pour déplacer le véhicule à quatre voies le long des premiers rails (11a, 11b).

7. Entrepôt automatisé selon la revendication 6, dans lequel le véhicule à quatre voies (10) comprend un plancher inférieur (34) ayant une ouverture traversante (33) en position latérale sous le premier lecteur optique (16).

8. Entrepôt automatisé selon l'une quelconque des revendications précédentes, dans lequel le second lecteur optique (25) pour les secondes représentations (24) de données de position est monté latéralement sur le véhicule à quatre voies (10), au niveau d'un côté où sont disposées des roues du deuxième ensemble de roues (28) pour déplacer le véhicule à quatre voies le long des seconds rails (12a, 12b).

9. Entrepôt automatisé selon l'une quelconque des revendications précédentes, dans lequel à chaque zone de croisement entre une paire de premiers rails (11a, 11b) et une paire de seconds rails (12a, 12b), pour chacun des seconds chemins de roulement un élément de connexion rectiligne (27) est disposé entre la paire de premiers rails (11a, 11b) perpendiculairement à celle-ci, dans lequel chaque élément de connexion (27) fournit une longueur de second chemin de roulement (21) alignée avec et reliant les seconds rails dans la zone de croisement entre la paire de premiers rails (11a, 11b) et la paire de seconds rails (12a, 12b), de sorte que les éléments de connexion (27) fournissent une continuation des seconds chemins de roulement (21) aux points où les seconds chemins de roulement (21) croisent les premiers rails (11a, 11b).

10. Entrepôt automatisé selon la revendication 9, dans lequel les éléments de connexion (27) sont montés par paires sur une plaque horizontale (29) adaptée pour supporter une paire de premiers rails (11a, 11b).

11. Entrepôt automatisé selon les revendications 6 et 9, dans lequel chaque élément de connexion (27) comporte un évidement supérieur (30) à une extrémité de celui-ci situé de manière adjacente à un premier rail (11b) comportant la première représentation (15) de données de position, ledit évidement supérieur étant configuré pour permettre au premier lecteur optique (16) une lecture ininterrompue de la première représentation (15) de données de position sur la paire de premiers rails (11a, 11b).

12. Entrepôt automatisé selon l'une quelconque des revendications précédentes, dans lequel les première et seconde représentations (15, 24) de données de position comprennent des données représentées sous forme de codes-barres ou de matrice de données et/ou similaires.

13. Entrepôt automatisé selon l'une quelconque des revendications précédentes, dans lequel les première et seconde représentations (15, 24) de données de position comprennent des données représentées sur des bandes (17) de matériau semblable à du ruban appliquées par adhésif sur les premiers et seconds rails (11a, 11b ; 12a, 12b).
